# EUROPEAN PATENT APPLICATION

(11) **EP 4 769 619 A1**
(43) Date of publication of application: **01.07.2026**
(21) Application number: 25867145.2
(22) Date of filing: 01.10.2025
(51) Int. Cl.: H01M 10/0566, H01M 10/0569, H01M 10/0567, H01M 10/0525, H01M 4/58, H01M 4/525, H01M 4/36, H01M 10/42, H01M 4/02

(54) **LITHIUM SECONDARY BATTERY**

(30) Priority: 11.10.2024 KR 20240138981; 30.09.2025 KR 20250143172
(71) Applicant: LG ENERGY SOLUTION, LTD., Seoul 07335 (KR)
(72) Inventor: SUH, Soo Min, Daejeon 34122 (KR); LEE, Chul Haeng, Daejeon 34122 (KR); AHN, Kyoung Ho, Daejeon 34122 (KR); HAN, Jun Hyeok, Daejeon 34122 (KR); OH, Young Ho, Daejeon 34122 (KR); JEONG, You Kyeong, Daejeon 34122 (KR); KO, Yoon Seok, Daejeon 34122 (KR); IM, Tae Yeong, Daejeon 34122 (KR)
(74) Representative: Hoffmann Eitle
(86) International application number: PCT/KR2025/015723
(87) International publication number: WO 2026/079837

(57) **Abstract**

The present disclosure relates to a lithium secondary battery including a positive electrode; a negative electrode facing the positive electrode; a separator disposed between the positive electrode and the negative electrode; and a non-aqueous electrolyte, wherein the positive electrode includes a first positive electrode active material and a second positive electrode active material, the first positive electrode active material includes lithium iron phosphate represented by Formula 1, the second positive electrode active material includes lithium nickel cobalt manganese oxide, and the non-aqueous electrolyte includes a lithium salt; a first solvent; and a second solvent, wherein the first solvent is a non-fluorinated carbonate organic solvent, and the second solvent is a compound represented by Formula 2, wherein a ratio (A/B) of a weight (A) of the first solvent to a weight (B) of the second solvent may be 0.67 or less.

## Description

### TECHNICAL FIELD

### Cross-reference to Related Applications

This application claims priority from Korean Patent Application Nos. 10-2024-0138981, filed on October 11, 2024, and 10-2025-0143172, filed on September 30, 2025, the disclosures of which are incorporated by reference herein.

### Technical Field

The present disclosure relates to a lithium secondary battery capable of securing excellent high-temperature cycle characteristics and capacity characteristics.

### BACKGROUND

As dependence on electrical energy is gradually increasing in modern society, development of a large-capacity power storage device capable of stably supplying electricity while simultaneously increasing production is emerging. Also, a need for high-capacity portable power is increasing as performance of electronic products from small electronic devices, such as mobile phones, to medium and large electronic devices, such as electric vehicles, improves. Lithium secondary batteries having the highest potential satisfy high-capacity power storage performance, and are thus used in various applications, from small electronic devices to electric vehicles (EVs) and energy storage systems (ESS).

The lithium secondary battery is generally composed of a positive electrode including a positive electrode active material, a negative electrode including a negative electrode active material, an electrolyte that serves as a medium for lithium-ion transport, and a separator. In this case, a carbon-based active material, a silicon-based active material, a lithium transition metal oxide, or lithium metal may be used as the negative electrode active material. Also, lithium transition metal oxides, such as lithium cobalt oxide (LiCoO₂), lithium nickel oxide (LiNiO₂), lithium nickel-cobalt-manganese composite oxide, and lithium iron phosphate, may be used as the positive electrode active material.

During charging of the lithium secondary battery, lithium ions are generated from the positive electrode and stored in the negative electrode through intercalation or alloy formation, and discharge proceeds in the opposite direction. During the charging and discharging of the lithium secondary battery, theoretically, movement of the lithium ions to the positive electrode and the negative electrode should be reversible, but in reality, some of the movement of lithium within the lithium secondary battery may be irreversible. Specifically, a medium through which the lithium ions may move is the electrolyte, wherein most of the lithium ions are intercalated/alloyed into the negative electrode active material during the charging, but a portion of the lithium ions may be reduced together with organic and inorganic substances constituting the electrolyte to form a nano-sized organic-inorganic composite on a surface of a negative electrode material, wherein this is an irreversible permanent loss of the lithium ions supplied from the positive electrode, and an organic-inorganic film thus formed is referred to as a solid electrolyte interface layer (SEI layer). A solid electrolyte interface layer may be formed on a surface of the positive electrode through an oxidation reaction of the substances constituting the electrolyte. When the solid electrolyte interface layer is formed, since the irreversible loss of the lithium ions is reduced and an operating potential of the electrolyte is widely secured, smooth reversible movement of the lithium ions between the positive electrode and the negative electrode may be possible. Since this solid electrolyte interface layer may also contribute to reducing an energy barrier required for the lithium ions to move to the negative electrode or the positive electrode depending on internal components, appropriate design of the solid electrolyte interface layer has become a research topic for improving performance of the lithium secondary battery.

Specifically, life characteristics and durability of the lithium secondary battery may be determined depending on stability of the solid-electrolyte interface layer. For example, as the lithium secondary battery undergoes charging and discharging, since additional reduction of the lithium ions may occur on the surface of the negative electrode material due to instability of the initially formed solid-electrolyte interface layer, a film thicker than the initially formed solid electrolyte interface layer may be formed. Due to the additional loss of the lithium ions, a thicker interface layer than the initially formed solid electrolyte interface layer may be additionally formed on a surface of a positive electrode material, or structural degradation of the positive electrode material may occur. This may be one of factors that increase resistance of the lithium secondary battery. Additionally, due to the instability of the solid-electrolyte interface layer, continuous oxidation and reduction reactions of the electrolyte may occur so that gas may be generated inside the lithium secondary battery. That is, in terms of stably operating the lithium secondary battery and securing battery performance such as long lifetime, high-temperature durability, and reduced gas generation, strengthening of the stability of the solid electrolyte interface layer is an important task.

### DISCLOSURE OF THE INVENTION

### TECHNICAL PROBLEM

An aspect of the present disclosure provides a lithium secondary battery capable of securing excellent high-temperature cycle characteristics and capacity characteristics by forming an interface layer capable of improving mobility of lithium ions and high-temperature durability on a surface of a positive electrode including two types of positive electrode active materials.

### TECHNICAL SOLUTION

[1] The present disclosure provides a lithium secondary battery including a positive electrode; a negative electrode facing the positive electrode; a separator disposed between the positive electrode and the negative electrode; and a non-aqueous electrolyte, wherein the positive electrode includes a first positive electrode active material and a second positive electrode active material, the first positive electrode active material includes lithium iron phosphate represented by Formula 1, the second positive electrode active material includes lithium nickel cobalt manganese oxide, and the non-aqueous electrolyte includes a lithium salt; a first solvent; and a second solvent, wherein the first solvent is a non-fluorinated carbonate organic solvent, and the second solvent is a compound represented by Formula 2, wherein a ratio (A/B) of a weight (A) of the first solvent to a weight (B) of the second solvent is 0.67 or less:

   [Formula 1] Li₁₊ₑFe_{1-g}M²_{g}(PO_{4-f})X_{f}

   In Formula 1,
   M² is at least one element selected from cobalt (Co), nickel (Ni), manganese (Mn), aluminum (Al), magnesium (Mg), titanium (Ti), or vanadium (V), X is fluorine (F), sulfur (S), or nitrogen (N), and 0≤g≤0.5; -0.5≤e≤+0.5; and 0≤f≤0.1. 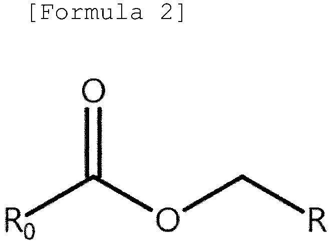
   In Formula 2,
   R₀ is an alkyl group having 1 to 5 carbon atoms which is substituted with at least one fluorine atom, and
   R is an alkyl group having 1 to 10 carbon atoms.
[2] The present disclosure provides the lithium secondary battery of [1] above, wherein the compound represented by Formula 1 is LiFePO₄, LiMn_{0.5}Fe_{0.5}PO₄, or LiMn_{0.6}Fe_{0.4}PO₄.
[3] The present disclosure provides the lithium secondary battery of [1] or [2] above, wherein the lithium nickel cobalt manganese oxide is a compound represented by Formula 3:

   [Formula 3] Li₁₊ₐ₁Niₓ₁Co_{y1}M¹₂M²O₂

   In Formula 3,
   M¹ is Mn, Al, or a combination thereof,
   M² is at least one selected from Al, zirconium (Zr), tungsten (W), Ti, Mg, calcium (Ca), or strontium (Sr), and
   0≤a1≤0.5, 0.55<x1<1.0, 0<y1≤0.4, 0<z≤0.4, and 0≤w≤0.1.
[4] The present disclosure provides the lithium secondary battery of at least one of [1] to [3] above, wherein the lithium nickel cobalt manganese oxide is Li(Ni_{0.6}Mn_{0.2}Co_{0.2})O₂, Li(Ni_{0.7}Mn_{0.15}Co_{0.15})O₂, Li(Ni_{0.7}Mn_{0.2}Co_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}Co_{0.05}Al_{0.02})O₂, or Li(Ni_{0.90}Mn_{0.05}Co_{0.05})O₂.
[5] The present disclosure provides the lithium secondary battery of at least one of [1] to [4] above, wherein the non-fluorinated carbonate organic solvent is a cyclic non-fluorinated carbonate organic solvent.
[6] The present disclosure provides the lithium secondary battery of at least one of [1] to [5] above, wherein, in Formula 2, R₀ is an alkyl group having 1 to 5 carbon atoms which is substituted with at least 2 fluorine atoms, and R is an alkyl group having 1 to 5 carbon atoms.
[7] The present disclosure provides the lithium secondary battery of at least one of [1] to [6] above, wherein, in Formula 2, R₀ is an alkyl group having 1 to 3 carbon atoms which is substituted with at least 2 fluorine atoms, and R is an alkyl group having 1 to 3 carbon atoms.
[8] The present disclosure provides the lithium secondary battery of at least one of [1] to [6] above, wherein the compound represented by Formula 2 is any one selected from compounds represented by Formulae 2A to 2C. 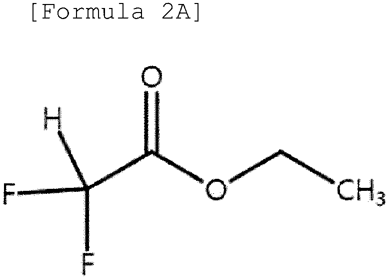 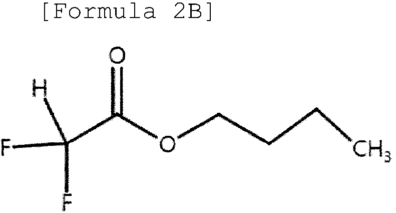 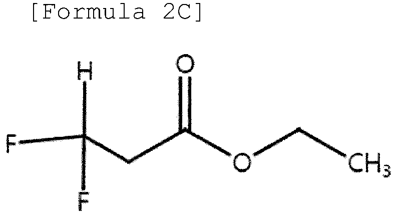
[9] The present disclosure provides the lithium secondary battery of at least one of [1] to [8] above, wherein a weight ratio of the first solvent to the second solvent is in a range of 1:99 to 40:60.
[10] The present disclosure provides the lithium secondary battery of at least one of [1] to [9] above, wherein the non-aqueous electrolyte further includes an additive, wherein the additive is at least one selected from an imidazole-based compound, an acrylate-based compound, or a nitrate-based compound.
[11] The present disclosure provides the lithium secondary battery of at least one of [1] to [10] above, wherein the imidazole-based compound is a compound represented by Formula 4. 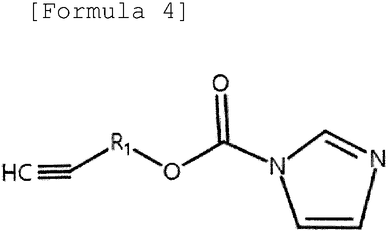
   In Formula 4,
   R₁ is an alkylene group having 1 to 5 carbon atoms.
[12] The present disclosure provides the lithium secondary battery of at least one of [1] to [11] above, wherein the acrylate-based compound is a compound represented by Formula 5. 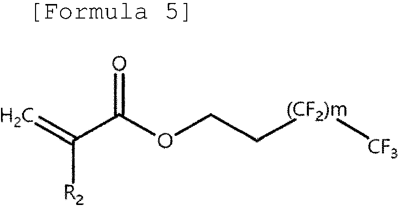
   In Formula 5,
   R₂ is hydrogen or an alkyl group having 1 to 3 carbon atoms, and m is an integer of 1 to 10.
[13] The present disclosure provides the lithium secondary battery of at least one of [1] to [12] above, wherein the nitrate-based compound is lithium nitrate (LiNO₃).

### ADVANTAGEOUS EFFECTS

Since a lithium secondary battery according to the present disclosure forms an interface layer capable of securing excellent lithium ion mobility and high-temperature durability at an interface between a positive electrode and an electrolyte through combination of the positive electrode including two types of positive electrode active materials and the non-aqueous electrolyte including a specific compound having high permittivity as a main electrolyte solvent, high-temperature cycle characteristics and capacity characteristics may be improved.

### DETAILED DESCRIPTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

For example, it will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Also, the expressions "a" and "b" in the description of "a to b carbon atoms" in the present specification each denote the number of carbon atoms included in a specific functional group. That is, the functional group may include "a" to "b" carbon atoms. For example, the expression "alkylene group having 1 to 5 carbon atoms" denotes an alkylene group including 1 to 5 carbon atoms, that is, -CH₂-, -CH₂CH₂-, - CH₂CH₂CH₂-, -CH₂(CH₂)CH-, -CH₂CH₂CH₂CH₂CH₂-, and -CH(CH₂) CH₂CH₂-.

Furthermore, in this specification, the expression "alkylene group" denotes a branched or unbranched aliphatic hydrocarbon group or a functional group in which one hydrogen atom is removed from carbon atoms located at both ends of the aliphatic hydrocarbon group. In an embodiment, the alkylene group may be substituted or unsubstituted. The alkylene group may include a methylene group, an ethylene group, a propylene group, an isopropylene group, a butylene group, an isobutylene group, a tert-butylene group, a pentylene group, and 3-pentylene group, but is not limited thereto, and each of them may be optionally substituted in another embodiment.

Also, unless otherwise defined in this specification, the expression "substitution" denotes that at least one hydrogen bonded to carbon is substituted with another element such as fluorine.

Hereinafter, the present disclosure will be described in more detail.

A non-aqueous electrolyte for a lithium secondary battery according to the present disclosure and a lithium secondary battery including the same include at least one of configurations disclosed below, and may include any combination between technically possible configurations among the configurations below.

### [Lithium Secondary Battery]

According to an embodiment of the present disclosure, a lithium secondary battery of the present disclosure may include:
a positive electrode; a negative electrode facing the positive electrode; a separator disposed between the positive electrode and the negative electrode; and a non-aqueous electrolyte.

The positive electrode may include a first positive electrode active material and a second positive electrode active material.

The first positive electrode active material may include lithium iron phosphate represented by Formula 1 below.

The second positive electrode active material may include lithium nickel cobalt manganese oxide.

The non-aqueous electrolyte may include a lithium salt, a first solvent, and a second solvent.

The first solvent may be a non-fluorinated carbonate organic solvent.

The second solvent may be a compound represented by Formula 2 below.

A ratio (A/B) of a weight (A) of the first solvent to a weight (B) of the second solvent may be 0.67 or less.

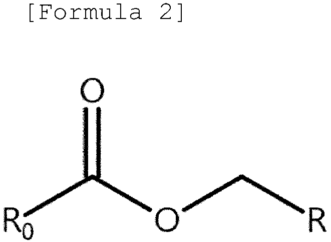

In Formula 2,
R₀ is an alkyl group having 1 to 5 carbon atoms which is substituted with at least one fluorine atom, and
R is an alkyl group having 1 to 10 carbon atoms.

The lithium secondary battery of the present disclosure may be prepared by accommodating an electrode assembly including the positive electrode; and the negative electrode facing the positive electrode in a battery case, and then injecting an electrolyte.

Also, the lithium secondary battery may dispose a separator between the positive electrode and the negative electrode, if necessary.

Each component will be described in more detail below.

### (1) Positive Electrode

The positive electrode may include a first positive electrode active material and a second positive electrode active material.

The first positive electrode active material may include lithium iron phosphate represented by Formula 1 below.

[Formula 1] Li₁₊ₑFe_{1-g}M²_{g}(PO_{4-f})X_{f}

In Formula 1,
M² is at least one element selected from cobalt (Co), nickel (Ni), manganese (Mn), aluminum (Al), magnesium (Mg), titanium (Ti), or vanadium (V), X is fluorine (F), sulfur (S), or nitrogen (N), and 0≤g≤0.5; -0.5≤e≤+0.5; and 0≤f≤0.1.

Specifically, as a representative example, the compound represented by Formula 1 may include LiFePO₄ (LFP) (g=0, e=0, and f=0), LiMn_{0.5}Fe_{0.5}PO₄ (g=0.5, e=0, and f=0) , and LiMn_{0.6}Fe_{0.4}PO₄ (g=0.4, e=0, and f=0).

The lithium iron phosphate may be in a form of a particle. The lithium iron phosphate may be in a form of a primary particle or a secondary particle in which a plurality of primary particles are aggregated or assembled. For example, as the lithium iron phosphate, primary particles with a nanometer size may be used for high input/output of lithium ions, and a secondary particle, as an aggregate of the primary particles, may be prepared by assembling these primary particles and may also be used. For example, in a case in which the lithium iron phosphate is in the form of a primary particle, the lithium iron phosphate may have an average particle diameter (D₅₀) of 0.05 µm to 2 um, more specifically, 0.2 µm to 1.1 µm. In a case in which the lithium iron phosphate is in the form of a secondary particle, the lithium iron phosphate may have an average particle diameter (D₅₀) of 0.5 µm to 30 µm.

Also, the lithium iron phosphate may include a coating layer disposed on a surface thereof. The coating layer may include carbon or metal oxide. The carbon included in the coating layer may be amorphous carbon. Since the coating layer has excellent electronic conductivity while allowing the lithium ions to pass therethrough, it may also act as a current path to the lithium iron phosphate core that is an active material, and thus, high-rate charge and discharge may be possible. Therefore, in a case in which the coating layer is included, safety of the positive electrode active material may be increased because an unnecessary reaction between the core material (lithium iron phosphate) and the electrolyte may be controlled.

Since a tetrahedron of PO₄ has strong covalent bonds between phosphorus and oxygen, the lithium iron phosphate is structurally stable against volume changes due to charge and discharge and has high thermal stability, but has relatively lower electrical conductivity and energy density than the lithium nickel cobalt manganese oxide because movement of lithium ions and flow of electrons are not smooth due to a hexagonally close-packed and strongly bonded oxygen structure. In addition, since iron (Fe), a transition metal, reduces passivation ability of a solid electrolyte interface (SEI) while being dissolved into the electrolyte and then precipitated as a metal phase on the facing negative electrode, degradation of the negative electrode may occur. Such degradation of the negative electrode may accelerate gas generation by promoting decomposition of the electrolyte solvent, and may shorten lifetime of the battery and may degrade performance by causing a side reaction such as deintercalation of the lithium ions intercalated into the negative electrode.

In order to solve these problems and further improve electrical conductivity of the positive electrode, the present disclosure may include a second positive electrode active material together with the first positive electrode active material, as the positive electrode active material. The second positive electrode active material may include lithium nickel cobalt manganese oxide. Since the lithium nickel cobalt manganese oxide has excellent electrical conductivity, it may overcome the above-described shortcomings of the first positive electrode active material.

The lithium nickel cobalt manganese oxide may include a compound represented by Formula 3 below.

[Formula 3] Li₁₊ₐ₁Niₓ₁Co_{y1}M¹_{z}M²_{w}O₂

In Formula 3,
M¹ is Mn, Al, or a combination thereof,
M² is at least one selected Al, zirconium (Zr), tungsten (W), Ti, Mg, calcium (Ca), or strontium (Sr), and 0≤a1≤0.5, 0.55<x1<1.0, 0<y1≤0.4, 0<z≤0.4, and 0≤w≤0.1.

In Formula 3, 1+a1 represents a molar ratio of lithium in the lithium nickel cobalt manganese oxide, wherein a1 may satisfy 0≤a1≤0.5, or may satisfy 0≤a1≤0.2, and may preferably satisfy 0≤a1≤0.1. When the molar ratio of the lithium satisfies the above range, a layered crystal structure of the lithium nickel cobalt manganese oxide may be stably formed. In a case in which a1 is greater than 0.5, there is a concern that initial discharge capacity of the battery decreases or that gas generation is intensified during high-temperature operation due to an excessive increase in lithium (Li) byproduct on a surface of the positive electrode active material.

x1 represents a molar ratio of nickel among total metallic elements excluding lithium in the lithium nickel cobalt manganese oxide, wherein x1 may satisfy 0.55<x1<1.0, or may satisfy 0.6≤x1≤0.98, and may preferably satisfy 0.7≤x1≤0.98. When x1 satisfies the above range, excellent capacity characteristics may be achieved.

y1 represents a molar ratio of cobalt among the total metallic elements excluding lithium in the lithium nickel cobalt manganese oxide, wherein y1 may satisfy 0<y1<0.4, and may preferably satisfy 0.05≤y1≤0.3.

z represents a molar ratio of element M¹ among the total metallic elements excluding lithium in the lithium nickel cobalt manganese oxide, wherein z may satisfy 0<z≤0.4, or may satisfy 0<z≤0.3, and may preferably satisfy 0.01≤z≤0.3.

w represents a molar ratio of element M² among the total metallic elements excluding lithium in the lithium nickel cobalt manganese oxide, wherein w may satisfy 0≤w≤0.1, or may satisfy 0.01≤w≤0.1.

The lithium nickel cobalt manganese oxide may be any one selected from Li(Ni_{0.6}Mn_{0.2}Co_{0.2})O₂, Li(Ni_{0.7}Mn_{0.2}CO_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}Co_{0.05}Al_{0.02})O₂, or Li(Ni_{0.90}Mn_{0.05}Co_{0.05})O₂.

In the positive electrode active material of the present disclosure, a weight ratio of the first positive electrode active material to the second positive electrode active material may be in a range of 50:50 to 80:20, and may specifically be in a range of 60:40 to 70:30.

In a case in which the weight ratio of the first positive electrode active material to the second positive electrode active material satisfies the above range, excellent capacity characteristics and electrical conductivity may be secured, and high-temperature and high-voltage safety of the battery may be secured.

In a case in which the lithium iron phosphate and the lithium nickel cobalt manganese oxide are mixed and used, overpotential occurs in a portion of the lithium nickel cobalt manganese oxide having a relatively larger particle size while non-uniform mixing of the positive electrode active material occurs due to a difference in particle sizes between the compounds, and life characteristics and capacity characteristics may degrade at high temperatures while capacity development of the lithium nickel cobalt manganese oxide is reduced during discharge.

The present disclosure is characterized in that, when preparing a secondary battery having a positive electrode including lithium iron phosphate and a high-nickel positive electrode active material, a non-aqueous electrolyte having a specific composition capable of enhancing stability of a solid electrolyte interface layer is used in combination so as to suppress the dissolution of iron or prevent the occurrence of overpotential.

That is, in a case in which the positive electrode including the two types of positive electrode active materials and the non-aqueous electrolyte containing a polar compound with high permittivity to be described later are used together, since a robust interface layer capable of increasing mobility of lithium ions at an interface between the electrode and the electrolyte and further improving wetting of the electrolyte may be formed, degradation of a positive electrode film due to the overpotential occurring in the high-nickel positive electrode active material, which is caused by the difference in particle sizes between the lithium iron phosphate and the lithium nickel cobalt manganese oxide, may be effectively suppressed and a side reaction between the positive electrode and the electrolyte may be prevented.

The positive electrode may include a positive electrode collector; and a positive electrode material mixture layer disposed on at least one surface of the positive electrode collector. In this case, the positive electrode material mixture layer may include the above-described positive electrode active material.

The positive electrode collector may typically have a thickness of 3 µm to 500 µm.

Microscopic irregularities may be formed on the surface of the positive electrode collector to improve adhesion of the positive electrode active material. For example, the positive electrode collector may be used in various shapes such as that of a film, a sheet, a foil, a net, a porous body, a foam body, a non-woven fabric body, and the like.

The positive electrode material mixture layer is disposed on at least one surface of the positive electrode collector. Specifically, the positive electrode material mixture layer may be disposed on one surface or both surfaces of the positive electrode collector.

The positive electrode active material may be present in an amount of 80 wt% to 99 wt% in the positive electrode material mixture layer in consideration of exhibiting sufficient capacity of the positive electrode active material.

The positive electrode material mixture layer may further include a binder and/or a conductive agent together with the above-described positive electrode active material.

The binder improves adhesion between positive electrode active material particles and adhesion between the positive electrode active material and the current collector. As an example of the binder, any one of a fluorine resin-based binder such as polyvinylidene fluoride (PVDF); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimidazole-based binder; a polyester-based binder; and a silane-based binder, or a mixture of two or more thereof may be used.

The binder may be present in the positive electrode material mixture layer in an amount of 0.1 wt% to 15.0 wt%, preferably, 0.1 wt% to 10.0 wt% based on a total weight of the positive electrode material mixture layer.

Next, the conductive agent is used to provide conductivity to the electrode, wherein any conductive agent may be used without particular limitation as long as it has electron conductivity without causing chemical changes in the battery. As a specific example of the conductive agent, carbon black such as acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The conductive agent may be present in the positive electrode material mixture layer in an amount of 0.1 wt% to 10.0 wt%, preferably, 0.1 wt% to 5.0 wt% based on the total weight of the positive electrode material mixture layer.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode may be prepared by coating the positive electrode collector with a positive electrode slurry including the positive electrode active material as well as optionally the binder, the conductive agent, and a solvent for forming a positive electrode slurry and then drying and rolling the coated positive electrode collector. Also, the positive electrode may be prepared by mixing the positive electrode active material with optionally the binder and the conductive agent to prepare a film and then laminating the film on the positive electrode collector.

The solvent for forming a positive electrode slurry, for example, may include at least one selected from distilled water, N-methyl pyrrolidone, ethanol, methanol, or isopropyl alcohol, and may preferably include N-methyl pyrrolidone, in terms of facilitating dispersion of the positive electrode active material, the binder, and/or the conductive agent.

### (2) Negative Electrode

Next, the negative electrode will be described.

The negative electrode may include a negative electrode active material.

The negative electrode active material is a material capable of reversibly intercalating/deintercalating lithium ions, wherein it may include at least one selected from a carbon-based active material, a (semi)metal-based active material, or a lithium metal, and may specifically include at least one selected from a carbon-based active material and a (semi)metal-based active material.

The carbon-based active material may include at least one selected from graphite, hard carbon, soft carbon, carbon black, graphene, or fibrous carbon, and may preferably include graphite. The graphite, for example, may be at least one of artificial graphite and natural graphite.

An average particle diameter (D₅₀) of the carbon-based active material may be in a range of 10 µm to 30 µm, preferably, 15 µm to 25 µm in terms of ensuring structural stability during charge and discharge and reducing a side reaction with an electrolyte solution.

Specifically, the (semi)metal-based active material may include at least one (semi)metal selected from copper (Cu), nickel (Ni), sodium (Na), potassium (K), rubidium (Rb), cesium (Cs), francium (Fr), beryllium (Be), magnesium (Mg), calcium (Ca), iron (Fe), strontium (Sr), silicon (Si), antimony (Sb), lead (Pb), indium (In), zinc (Zn), barium (Ba), radium (Ra), germanium (Ge), aluminum (Al), vanadium (V), titanium (Ti), or tin (Sn); an alloy of lithium and the at least one (semi)metal selected from Cu, Ni, Na, K, Rb, Cs, Fr, Be, Mg, Ca, Fe, Sr, Si, Sb, Pb, In, Zn, Ba, Ra, Ge, Al, V, Ti, or Sn; an oxide of the at least one (semi)metal selected from Cu, Ni, Na, K, Rb, Cs, Fr, Be, Mg, Ca, Fe, Sr, Si, Sb, Pb, In, Zn, Ba, Ra, Ge, Al, V, Ti, or Sn; lithium titanium oxide (LTO); or lithium vanadium oxide.

More specifically, the (semi)metal-based active material may include a silicon-based active material.

The silicon-based active material may include at least one selected from a compound represented by SiOₓ (0≤x<2) or a silicon-carbon composite. Since SiO₂ may not store lithium because it does not react with lithium ions, x is preferably within the above range and the silicon-based oxide may more preferably be SiO.

An average particle diameter (D₅₀) of the silicon-based active material may be in a range of 1 µm to 30 µm, preferably, 2 µm to 15 µm in terms of ensuring the structural stability during charge and discharge and reducing the side reaction with the electrolyte solution.

Also, the negative electrode of the present disclosure may include at least one selected from the carbon-based active material or the silicon-based active material.

Specifically, the negative electrode of the present disclosure may include the carbon-based active material and the silicon-based active material.

In this case, a weight ratio of the silicon-based active material to the carbon-based active material may be in a range of 1:99 to 30:70, specifically, 3:97 to 15:85. In a case in which the mixing ratio of the silicon-based active material to the carbon-based active material satisfies the above range, since volume expansion of the silicon-based active material is suppressed while capacity characteristics are improved, excellent cycle performance may be ensured.

The negative electrode may include a negative electrode collector; and a negative electrode material mixture layer disposed on at least one surface of the negative electrode collector. In this case, the negative electrode active material may be included in the negative electrode material mixture layer.

The negative electrode collector is not particularly limited as long as it has high conductivity without causing chemical changes in the battery. Specifically, copper, stainless steel, aluminum, nickel, titanium, fired carbon, copper or stainless steel that is surface-treated with one of carbon, nickel, titanium, silver, or the like, and an aluminum-cadmium alloy may be used as the negative electrode collector.

The negative electrode collector may typically have a thickness of 3 µm to 500 µm.

Microscopic irregularities may be formed on the surface of the negative electrode collector to improve adhesion of the negative electrode active material. For example, the negative electrode collector may be used in various shapes such as that of a film, a sheet, a foil, a net, a porous body, a foam body, a non-woven fabric body, and the like.

The negative electrode material mixture layer is disposed on at least one surface of the negative electrode collector. Specifically, the negative electrode material mixture layer may be disposed on one surface or both surfaces of the negative electrode collector.

The negative electrode active material may be present in an amount of 60 wt% to 99 wt% in the negative electrode material mixture layer in terms of sufficiently exhibiting the capacity in the secondary battery while minimizing an effect of volume expansion/contraction on the battery.

The negative electrode material mixture layer may further include a conductive agent and/or a binder together with the silicon-based active material.

The binder may be used to improve adhesion between the negative electrode material mixture layer and the negative electrode collector to be described later, or to improve a binding force between the silicon-based active materials.

Specifically, the binder is a component that assists in binding between the conductive agent, the active material, and the current collector, wherein the binder may typically include a fluorine resin-based binder such as polyvinylidene fluoride (PVDF); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimidazole-based binder; a polyester-based binder; and a silane-based binder.

The binder may be present in an amount of 0.1 wt% to 15 wt%, preferably, 0.1 wt% to 10 wt% based on a total weight of the negative electrode material mixture layer.

The conductive agent is a component for further improving conductivity of the negative electrode active material, wherein it may be added in an amount of 10 wt% or less, preferably, 5 wt% or less based on the total weight of the negative electrode material mixture layer. The conductive agent is not particularly limited as long as it has conductivity without causing chemical changes in the battery, and, for example, a conductive material, such as: carbon black such as acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The negative electrode may be prepared by coating the negative electrode collector with a negative electrode slurry including the negative electrode active material as well as optionally the binder, the conductive agent, and a solvent for forming a negative electrode slurry and then drying and rolling the coated negative electrode collector. Also, the negative electrode may be prepared by mixing the negative electrode active material with optionally the binder and the conductive agent to prepare a film and then laminating the film on the negative electrode collector.

The solvent for forming a negative electrode slurry, for example, may include at least one selected from distilled water, N-methyl pyrrolidone, ethanol, methanol, or isopropyl alcohol, and may preferably include distilled water, in terms of facilitating dispersion of the negative electrode active material, the binder, and/or the conductive agent.

### (3) Non-Aqueous Electrolyte

### (3-1) Lithium Salt

Lithium salts commonly used in a non-aqueous electrolyte for a lithium secondary battery may be used as the lithium salt without limitation, and, for example, the lithium salt may include Li⁺ as a cation, and may include any one selected from F⁻, Cl⁻, Br⁻, I⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, or SCN⁻ as an anion.

Specifically, the lithium salt may include a single material selected from LiCl, LiBr, LiI, LiBF₄, LiClO₄, LiB₁₀Cl₁₀, LiAlCl₄, LiAlO₄, LiPF₆, LiCF₃SO₃, LiCH₃CO₂, LiCF₃CO₂, LiAsF₆, LiSbF₆, LiCH₃SO₃, LiN(SO₂F)₂ (Lithium bis(fluorosulfonyl)imide, LiFSI), LiN(SO_{2C}F₂CF₃)₂ (lithium bis(pentafluoroethanesulfonyl)imide, LiBETI), or LiN(SO₂CF₃)₂ (lithium bis(trifluoromethane sulfonyl)imide, LiTFSI), or a mixture of two or more thereof, and may specifically include any one selected from LiBF₄, LiPF₆, LiN(SO₂F)₂ (Lithium bis (fluorosulfonyl) imide, LiFSI), LiN(SO₂CF₂CF₃)₂ (lithium bis(pentafluoroethanesulfonyl)imide, LiBETI), or LiN(SO₂CF₃)₂ (lithium bis (trifluoromethane sulfonyl) imide, LiTFSI). In addition to these materials, a lithium salt typically used in the non-aqueous electrolyte for a lithium secondary battery may be used without limitation.

The lithium salt may be appropriately changed in a normally usable range, but may be present in a concentration of 0.8 M to 3.0 M, specifically 1.0 M to 2.0 M, and preferably 1.0 M to 1.8 M in the electrolyte solution to obtain an optimum effect of forming a film for preventing corrosion of a surface of the electrode.

In a case in which the concentration of the lithium salt is within the above range, viscosity of the electrolyte may be controlled to achieve optimal impregnability, and an effect of improving capacity characteristics and cycle characteristics of the lithium secondary battery may be obtained by improving mobility of lithium ions.

### (3-2) First Solvent

In the electrolyte of the present disclosure, the first solvent may be a non-fluorinated carbonate organic solvent.

The non-fluorinated carbonate organic solvent may specifically include at least one selected from a non-fluorinated cyclic carbonate organic solvent and a non-fluorinated linear carbonate organic solvent, and may specifically include a non-fluorinated cyclic carbonate organic solvent and a non-fluorinated linear carbonate organic solvent. More specifically, it is desirable that the non-fluorinated carbonate organic solvent includes a non-fluorinated cyclic carbonate organic solvent.

Specifically, the non-fluorinated cyclic carbonate organic solvent is an organic solvent which may well dissociate the lithium salt in the electrolyte due to high permittivity as a highly viscous organic solvent, wherein typical examples of the non-fluorinated cyclic carbonate organic solvent may be at least one organic solvent selected from ethylene carbonate (EC), propylene carbonate (PC), 1,2-butylene carbonate, 2,3-butylene carbonate, 1,2-pentylene carbonate, 2,3-pentylene carbonate, or vinylene carbonate, and the non-fluorinated cyclic carbonate organic solvent may specifically include at least one selected from ethylene carbonate (EC) and propylene carbonate (PC), and may more specifically include ethylene carbonate (EC).

Also, the non-fluorinated linear carbonate organic solvent is an organic solvent having low viscosity and low permittivity, wherein the non-fluorinated linear carbonate organic solvent may specifically include at least one selected from dimethyl carbonate (DMC), diethyl carbonate (DEC), dipropyl carbonate (DPC), ethyl methyl carbonate (EMC), methylpropyl carbonate (MPC), or ethylpropyl carbonate (EPC), may more specifically include at least one selected from ethylmethyl carbonate and diethyl carbonate, and still more specifically, may include ethylmethyl carbonate.

With respect to a fluorinated carbonate organic solvent conventionally used as a non-aqueous electrolyte solvent, since it forms a film containing a large amount of organic impurities during charge and discharge, a side reaction may be intensified when applied to a lithium secondary battery requiring high-voltage charging. In this regard, it is preferable in the present disclosure to use the non-fluorinated carbonate organic solvent as the first solvent. In an embodiment, the organic solvent may not contain a fluorinated carbonate organic solvent (e.g., fluoroethylene carbonate, etc.), or may contain it in a small amount (e.g., 5 wt% or less based on a total weight of the non-aqueous electrolyte).

However, in a case in which the non-fluorinated carbonate organic solvent is used alone, since it may cause gas generation during charge and discharge or may increase a decomposition product of the lithium salt as stabilization of the lithium salt is reduced due to low permittivity, an increase in resistance and a degradation of life characteristics of the secondary battery may occur. Accordingly, in the present disclosure, a compound represented by Formula 2, which may ensure the stabilization of the lithium salt by having high permittivity, is used as an organic solvent in combination with the first organic solvent.

### (3-3) Second Solvent

Specifically, the non-aqueous electrolyte of the present disclosure may include a compound represented by Formula 2 below as a second solvent.

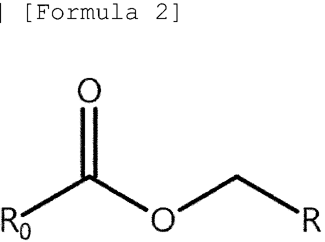

In Formula 2,
R₀ is an alkyl group having 1 to 5 carbon atoms which is substituted with at least one fluorine atom, and
R is an alkyl group having 1 to 10 carbon atoms.

Since the compound represented by Formula 2 is a polar compound having a higher permittivity than the non-fluorinated carbonate organic solvent used as the first solvent as it contains a partially fluorinated ester group in its structure, it facilitates polarization of the non-aqueous electrolyte in response to an electric field and may form a film that buffers stress applied to the interface between the electrode and the electrolyte by preventing local concentration of electrical properties.

In a case in which the compound represented by Formula 2 having high permittivity is used as a main solvent of the electrolyte, since it allows lithium ions to be better dissociated in the non-aqueous electrolyte, it may suppress generation of the decomposition product of the lithium salt by reducing ion pair formation of lithium ions and may act so that the primary interfacial film may be mainly composed of solvent molecules. Thus, during initial reduction, an interfacial film with a high proportion of organic/carbonate components, such as ROCO₂Li, polycarbonate, and Li₂CO₃, which may increase lithium-ion mobility by increasing solvent reduction efficiency, may be formed.

Furthermore, since the compound represented by Formula 2 may form a LiF-containing interfacial film caused by the fluorinated ester group on a surface of the positive electrode while being decomposed during charge and discharge, it may effectively suppress dissolution of transition metals from the positive electrode active material.

In the present disclosure, since the LiF-containing interfacial film with a high proportion of organic/carbonate components, which may buffer the stress applied to the interface between the electrode and the electrolyte and may simultaneously increase the lithium ion mobility, is formed on the surface of the electrode by combining the positive electrode including the positive electrode active material, in which the above-described two types of positive electrode active materials, for example, the lithium iron phosphate and the lithium nickel cobalt manganese oxide are mixed, and the non-aqueous electrolyte using the compound represented by Formula 2 having high permittivity as the main solvent, it may make current distribution, which is caused by the non-uniform mixing due to the difference in particle sizes of the two types of positive electrode active materials, uniform to reduce chemical and mechanical stress and suppress the degradation of the positive electrode film due to the overpotential, and thus, the side reaction between the positive electrode and the electrolyte may be effectively prevented.

In Formula 2, R₀ may be an alkyl group having 1 to 5 carbon atoms which is substituted with at least 2 fluorine atoms, may specifically be an alkyl group having 1 to 3 carbon atoms which is substituted with at least 2 fluorine atoms, and may more specifically be CHF₂₋.

In Formula 2, R may be an alkyl group having 1 to 5 carbon atoms, and may specifically be an alkyl group having 1 to 4 carbon atoms. For example, R may be a methyl group, an ethyl group, a propyl group, or a butyl group.

Specifically, the compound represented by Formula 2 may be any one selected from compounds represented by Formulae 2A to 2C below.

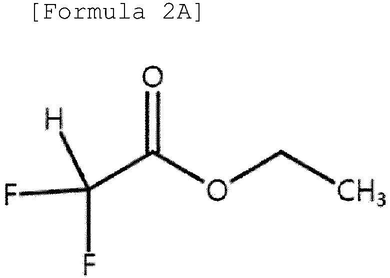

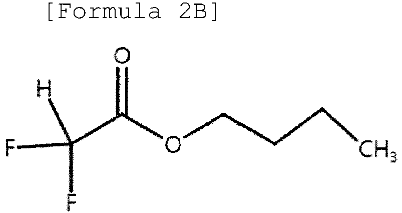

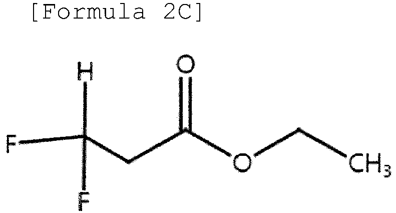

In the non-aqueous electrolyte for a lithium secondary battery of the present disclosure, the ratio (A/B) of the weight (A) of the first solvent to the weight (B) of the second solvent may be 0.67 or less, 0.65 or less, 0.63 or less, 0.60 or less, 0.58 or less, 0.56 or less, 0.54 or less, 0.52 or less, 0.50 or less, 0.48 or less, 0.46 or less, 0.44 or less, 0.42 or less, 0.40 or less, 0.38 or less, 0.36 or less, 0.34 or less, 0.32 or less, or 0.30 or less. Also, the ratio (A/B) of the weight (A) of the first solvent to the weight (B) of the second solvent may be 0.01 or more, 0.02 or more, 0.03 or more, 0.04 or more, 0.05 or more, 0.06 or more, 0.07 or more, 0.08 or more, 0.09 or more, or 0.1 or more. Specifically, the weight ratio of the first solvent to the second solvent may be in a range of 1:99 to 40:60, 5:85 to 40:60, 10:90 to 40:60, 10:90 to 35:65, or 10:90 to 30:70, and may preferably be in a range of 10:90 to 25:75.

In a case in which the content ratio of the first solvent to the second solvent satisfies the above range, the gas generation may be significantly reduced by reducing an amount of the non-fluorinated carbonate solvent used during a formation process, the generation of the decomposition product of the lithium salt may be suppressed by increasing a lithium salt stabilization effect by the high permittivity of the second solvent, and high-temperature durability may be ensured by forming a fluorine-containing film (e.g., LiF film) with high high-temperature durability on surfaces of the positive electrode and the negative electrode. Particularly, the side reaction between the positive electrode and the electrolyte may be effectively prevented by suppressing the degradation of the positive electrode film due to the overpotential occurring in the high-nickel positive electrode active material which is caused by the non-uniform mixing due to the difference in particle sizes of the two types of positive electrode active materials.

In a case in which a non-fluorine ester-based compound instead of the compound represented by Formula 2 is included as the second solvent, film degradation may occur during operation as a fluorine-free film (e.g., LiF film) is formed. Also, with respect to a fluorinated acrylate-based compound to be described later that is used as an additive, it has high-viscosity properties due to its high molecular weight. Thus, in a case in which the fluorinated acrylate-based compound to be described later is included as the second solvent, i.e., the main solvent of the electrolyte, since the viscosity of the non-aqueous electrolyte is increased to decrease the wetting of the electrolyte, initial resistance may significantly increase during battery operation. In addition, since an excessively polymeric film is formed while a terminal double bond structure of the fluorinated acrylate-based compound to be described later is decomposed by radicals under electrochemical oxidation and reduction conditions, an interfacial film with a high increase in resistance is formed. As a result, the mobility of lithium ions in the electrolyte is reduced, and accordingly, since the initial resistance significantly increases during battery operation, a high-rate charge and discharge effect may be significantly degraded.

### (3-4) Additive

The non-aqueous electrolyte for a lithium secondary battery of the present disclosure may further include an additive.

The additive may include at least one selected from an imidazole-based compound, an acrylate-based compound, or a nitrate-based compound.

### (i) Imidazole-Based Compound

The imidazole-based compound is a low-viscosity compound, wherein it may include a compound represented by Formula 4 below.

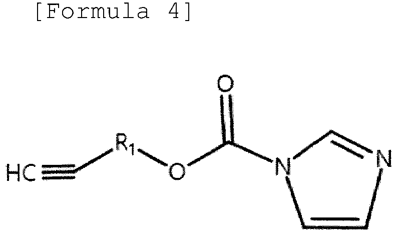

In Formula 4,
R₁ is an alkylene group having 1 to 5 carbon atoms.

Since the imidazole-based compound contains nitrogen having a lone electron pair in its structure, it has an effect of scavenging the decomposition product of the lithium salt. Thus, in a case in which it is included as an additive, since film degradation due to the decomposition product of the lithium salt may be prevented, a more robust film may be formed.

In Formula 4, R₁ may be an alkylene group having 1 to 3 carbon atoms.

Specifically, the imidazole-based compound may be a compound represented by Formula 4A below.

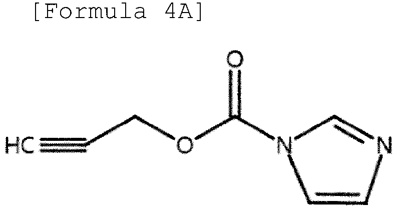

The imidazole-based compound may be present in an amount of 0.01 wt% or more, 0.03 wt% or more, 0.05 wt% or more, 0.07 wt% or more, 0.09 wt% or more, or 0.1 wt% or more based on the total weight of the non-aqueous electrolyte. Also, the imidazole-based compound may be present in an amount of 5.0 wt% or less, 4.0 wt% or less, 3.0 wt% or less, or 2.0 wt% or less based on the total weight of the non-aqueous electrolyte.

In a case in which the amount of the imidazole-based compound satisfies the above range, an increase in the viscosity of the electrolyte of the present disclosure may be suppressed even if an excessive amount of the second solvent is used, and since a decrease in ionic conductivity and an increase in resistance may also be suppressed, the cycle characteristics and capacity characteristics may be improved during high-temperature operation and/or storage.

### (ii) Acrylate-Based Compound

The acrylate-based compound is a low-viscosity compound, wherein it may include a compound represented by Formula 5 below.

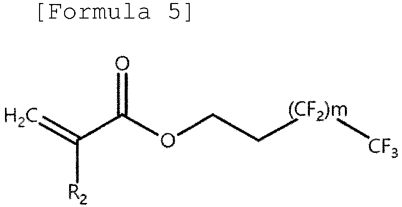

In Formula 5,
R₂ is hydrogen or an alkyl group having 1 to 3 carbon atoms, and m is an integer of 1 to 10.

The acrylate-based compound may form a robust inorganic film containing a fluorine element while a double bond (C=C) functional group contained in its molecular structure is electrochemically decomposed on the surfaces of the positive electrode and the negative electrode during an initial formation process. The above inorganic film may improve durability of the solid electrolyte interface layer and may suppress the decomposition of the electrode film even at high temperatures, and, as a result, it may achieve an effect of improving high-temperature storage characteristics and cycle life characteristics of the secondary battery by suppressing the dissolution of metals from the positive electrode and preventing the side reaction between the electrode and the electrolyte. Also, the acrylate-based compound may form a more robust SEI layer by generating radicals while the double bond functional group is reductively decomposed and promoting a decomposition reaction of additives by these radicals.

In Formula 5, R₂ is hydrogen, and m may be an integer of 5 to 10. Also, in Formula 5, m may be an integer of 7 to 9.

Specifically, the acrylate-based compound may be a compound represented by Formula 5A below.

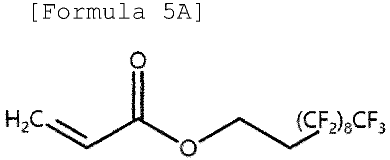

The acrylate-based compound may be present in an amount of 0.01 wt% or more, 0.03 wt% or more, 0.05 wt% or more, 0.07 wt% or more, 0.09 wt% or more, or 0.1 wt% or more based on the total weight of the non-aqueous electrolyte. Also, the acrylate-based compound may be present in an amount of 5.0 wt% or less, 4.0 wt% or less, 3.0 wt% or less, or 2.0 wt% or less based on the total weight of the non-aqueous electrolyte.

In a case in which the amount of the acrylate-based compound satisfies the above range, the increase in the viscosity of the electrolyte of the present disclosure may be suppressed even if the excessive amount of the second solvent is used, and since the decrease in ionic conductivity and the increase in resistance may also be suppressed, the cycle characteristics and capacity characteristics may be improved during high-temperature operation and/or storage.

### (iii) Nitrate-Based Compound

The non-aqueous electrolyte of the present disclosure may include lithium nitrate (LiNO₃) as the nitrate-based compound.

Since the lithium nitrate (LiNO₃) may form an inorganic film containing lithium-nitrogen and lithium-oxygen bonds that may function as ion conductors capable of uniformly transporting lithium ions on the surfaces of the positive electrode and the negative electrode through an electrochemical reduction reaction during a formation step, it may induce a more effective charge transfer reaction. Such a film may reduce resistance by improving lithium-ion diffusivity within the film, may minimize reversible lithium-ion loss by having excellent high-temperature durability, and may effectively suppress the dissolution of transition metals from the positive electrode by preventing the side reaction between the electrolyte and the positive electrode.

The nitrate-based compound may be present in an amount of 0.01 wt% or more, 0.03 wt% or more, 0.05 wt% or more, 0.07 wt% or more, 0.09 wt% or more, or 0.1 wt% or more based on the total weight of the non-aqueous electrolyte. Also, the nitrate-based compound may be present in an amount of 10.0 wt% or less, 8.0 wt% or less, 6.0 wt% or less, 4.0 wt% or less, or 2.0 wt% or less based on the total weight of the non-aqueous electrolyte.

In a case in which the amount of the nitrate-based compound satisfies the above range, a robust inorganic film containing lithium-nitrogen and lithium-oxygen bonds may be formed on the surfaces of the positive electrode and the negative electrode. That is, in a case in which the amount of the nitrate-based compound included is 0.01 wt% or more, since formation of an electrode film having low resistance is possible, an increase in battery resistance may be suppressed, and as a result, degradation of battery performance may be prevented. Also, in a case in which the amount of the nitrate-based compound included is 10 wt% or less, since generation of unnecessary formation gas is prevented by suppressing a side reaction caused by an excessive amount of the additive, degradation of high-temperature cycle and high-temperature storage characteristics may be prevented.

In a case in which only one additive selected from the imidazole-based compound, the acrylate-based compound, and the nitrate-based compound is included as the additive in the non-aqueous electrolyte, the additive may be referred to as a first additive. Also, in a case in which two additives selected from the imidazole-based compound, the acrylate-based compound, and the nitrate-based compound are included as the additives, these additives may be referred to as a first additive and a second additive, respectively. Furthermore, in a case in which all of the imidazole-based compound, the acrylate-based compound, and the nitrate-based compound are included as the additives, these additives may be referred to as a first additive, a second additive, and a third additive, respectively.

The present disclosure may further include auxiliary additives in addition to the above additive, if necessary, in order to prevent the occurrence of collapse of the negative electrode due to decomposition of the electrolyte in a high output environment or to further improve low-temperature high-rate discharge characteristics, high-temperature stability, overcharge prevention, and an effect of suppressing battery swelling at high temperature.

Typical examples of the auxiliary additives may include any one auxiliary additive selected from a sulfate-based compound, a sultone-based compound, a borate-based compound, a nitrile-based compound, a benzene-based compound, an amine-based compound, or a silane-based compound.

Specifically, the sulfate-based compound is an additive capable of improving high-temperature durability by forming a robust inorganic film containing Li₂SO₃, etc., wherein typical examples thereof may be ethylene sulfate (Esa), trimethylene sulfate (TMS), or methyl trimethylene sulfate (MTMS), and the sulfate-based compound may preferably include ethylene sulfate (Esa) .

The sultone-based compound may include any one compound selected from 1,3-propane sultone (PS), 1,4-butane sultone, ethane sultone, 1,3-propene sultone (PRS), 1,4-butene sultone, or 1-methyl-1,3-propene sultone.

The borate-based compound may include tetraphenylborate and lithium oxalyldifluoroborate.

The nitrile-based compound may include any one compound selected from succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, or 4-fluorophenylacetonitrile.

The benzene-based compound may include fluorobenzene, the amine-based compound may include triethanolamine or ethylenediamine, and the silane-based compound may include tetravinylsilane.

Two or more auxiliary additives may be mixed and used, and the auxiliary additives may be present in an amount of less than 10 wt%, particularly 0.01 wt% to less than 8.0 wt%, and preferably 0.05 wt% to 5.0 wt% based on the total weight of the electrolyte.

### (4) Separator

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for a non-aqueous electrolyte as well as low resistance to the transfer of non-aqueous electrolyte ions is preferable.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

A shape of the lithium secondary battery of the present disclosure is not particularly limited, but a cylindrical type, a prismatic type, a pouch type, or a coin type may be used.

Also, the lithium secondary battery according to the present disclosure as described above may be suitably used in portable devices, such as mobile phones, notebook computers, and digital cameras, and electric cars such as hybrid electric vehicles (HEVs).

Hereinafter, the present disclosure will be described in more detail according to examples. However, the invention may be embodied in many different forms and should not be construed as being limited to the embodiments set forth herein. Rather, these example embodiments are provided so that this description will be thorough and complete, and will fully convey the scope of the present disclosure to those skilled in the art.

### [Examples]

### Example 1.

### (Non-Aqueous Electrolyte Preparation)

LiPF₆ was dissolved in an organic solvent, in which ethylene carbonate and the compound represented by Formula 2A were mixed in a weight ratio of 40:60, such that a concentration of the LiPF₆ was 1.0 M to prepare a non-aqueous electrolyte for a lithium secondary battery.

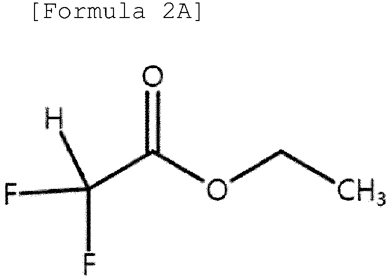

### (Lithium Secondary Battery Preparation)

A positive electrode active material (LiFePO₄ and Li(Ni_{0.8}Mn_{0.1}Co_{0.1})O₂ = 60:40 weight ratio), a conductive agent (carbon black), and a binder (polyvinylidene fluoride, PVDF) were added in a weight ratio of 90:5:5 to N-methyl-2-pyrrolidone (NMP), as a solvent, to prepare a positive electrode active material slurry (solid content 48 wt%). A 100 um thick positive electrode collector (Al thin film) was coated with the positive electrode active material slurry, dried, and roll-pressed to prepare a positive electrode.

Then, a negative electrode active material (weight ratio of artificial graphite to SiO was 92:8), PVDF as a binder, and carbon black, as a conductive agent, were added to NMP, as a solvent, in a weight ratio of 95:2:3 to prepare a negative electrode active material slurry (solid content: 70 wt%). A 90 µm thick negative electrode collector (Cu thin film) was coated with the negative electrode active material slurry, dried, and roll-pressed to prepare a negative electrode.

An electrode assembly was prepared by a conventional method of sequentially stacking the above-prepared positive electrode and negative electrode together with a polyethylene porous film, and was then accommodated in a pouch type secondary battery case, and the above-prepared non-aqueous electrolyte for a lithium secondary battery was injected to prepare a lithium secondary battery.

### Example 2.

### (Non-Aqueous Electrolyte Preparation)

LiPF₆ was dissolved in an organic solvent, in which ethylene carbonate and the compound represented by Formula 2A were mixed in a weight ratio of 30:70, such that a concentration of the LiPF₆ was 1.0 M to prepare a non-aqueous electrolyte for a lithium secondary battery.

### (Lithium Secondary Battery Preparation)

A lithium secondary battery was prepared in the same manner as in Example 1 except that the above-prepared non-aqueous electrolyte for a lithium secondary battery was injected.

### Example 3.

### (Non-Aqueous Electrolyte Preparation)

LiPF₆ was dissolved in an organic solvent, in which ethylene carbonate and the compound represented by Formula 2A were mixed in a weight ratio of 20:80, such that a concentration of the LiPF₆ was 1.0 M to prepare a non-aqueous electrolyte for a lithium secondary battery.

### (Lithium Secondary Battery Preparation)

A lithium secondary battery was prepared in the same manner as in Example 1 except that the above-prepared non-aqueous electrolyte for a lithium secondary battery was injected.

### Example 4.

### (Non-Aqueous Electrolyte Preparation)

LiPF₆ was dissolved in an organic solvent, in which ethylene carbonate and the compound represented by Formula 2A were mixed in a weight ratio of 10:90, such that a concentration of the LiPF₆ was 1.0 M to prepare a non-aqueous electrolyte for a lithium secondary battery.

### (Lithium Secondary Battery Preparation)

A lithium secondary battery was prepared in the same manner as in Example 1 except that the above-prepared non-aqueous electrolyte for a lithium secondary battery was injected.

### Example 5.

### (Non-Aqueous Electrolyte Preparation)

LiPF₆ was dissolved in an organic solvent, in which ethylene carbonate and the compound represented by Formula 2B were mixed in a weight ratio of 30:70, such that a concentration of the LiPF₆ was 1.0 M to prepare a non-aqueous electrolyte for a lithium secondary battery.

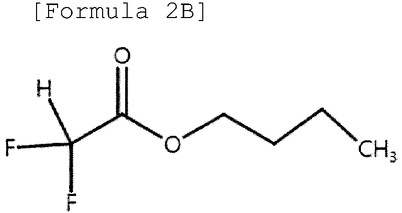

### (Lithium Secondary Battery Preparation)

A lithium secondary battery was prepared in the same manner as in Example 1 except that the above-prepared non-aqueous electrolyte for a lithium secondary battery was injected.

### Example 6.

### (Non-Aqueous Electrolyte Preparation)

LiPF₆ was dissolved in an organic solvent, in which ethylene carbonate and the compound represented by Formula 2A were mixed in a weight ratio of 30:70, such that a concentration of the LiPF₆ was 1.0 M, and the compound represented by Formula 4A was added as an additive to prepare a non-aqueous for a lithium secondary battery. The compound represented by Formula 4A was present in an amount of 1 wt% in the non-aqueous electrolyte for a lithium secondary battery.

### (Lithium Secondary Battery Preparation)

A lithium secondary battery was prepared in the same manner as in Example 1 except that the above-prepared non-aqueous electrolyte for a lithium secondary battery was injected.

### Example 7.

### (Non-Aqueous Electrolyte Preparation)

LiPF₆ was dissolved in an organic solvent, in which ethylene carbonate and the compound represented by Formula 2A were mixed in a weight ratio of 30:70, such that a concentration of the LiPF₆ was 1.0 M, and the compound represented by Formula 5A was added as an additive to prepare a non-aqueous for a lithium secondary battery. The compound represented by Formula 5A was present in an amount of 1 wt% in the non-aqueous electrolyte for a lithium secondary battery.

### (Lithium Secondary Battery Preparation)

A lithium secondary battery was prepared in the same manner as in Example 1 except that the above-prepared non-aqueous electrolyte for a lithium secondary battery was injected.

### Example 8.

### (Preparation of Electrolyte for Secondary Battery)

LiPF₆ was dissolved in an organic solvent, in which ethylene carbonate and the compound represented by Formula 2A were mixed in a weight ratio of 30:70, such that a concentration of the LiPF₆ was 1.0 M, and the compound represented by Formula 4A, the compound represented by Formula 5A, and LiNO₃ were added as additives to prepare a non-aqueous for a lithium secondary battery.

The compound represented by Formula 4A, the compound represented by Formula 5A, and LiNO₃ were present in amounts of 0.4 wt%, 0.3 wt%, and 0.3 wt% in the non-aqueous electrolyte for a lithium secondary battery, respectively.

### (Lithium Secondary Battery Preparation)

A lithium secondary battery was prepared in the same manner as in Example 1 except that the above-prepared non-aqueous electrolyte for a lithium secondary battery was injected.

### Comparative Example 1.

### (Non-Aqueous Electrolyte Preparation)

LiPF₆ was dissolved in an organic solvent, in which ethylene carbonate and the compound represented by Formula 2A were mixed in a weight ratio of 60:40, such that a concentration of the LiPF₆ was 1.0 M to prepare a non-aqueous electrolyte for a lithium secondary battery.

### (Lithium Secondary Battery Preparation)

A lithium secondary battery was prepared in the same manner as in Example 1 except that the above-prepared non-aqueous electrolyte for a lithium secondary battery was injected.

### Comparative Example 2.

### (Non-Aqueous Electrolyte Preparation)

LiPF₆ was dissolved in an organic solvent, in which ethylene carbonate and a compound represented by Formula 6 below were mixed in a weight ratio of 30:70, such that a concentration of the LiPF₆ was 1.0 M to prepare a non-aqueous electrolyte for a lithium secondary battery.

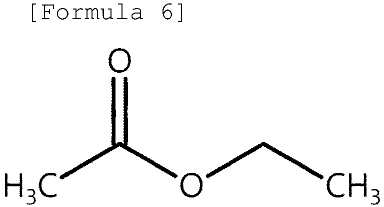

### (Lithium Secondary Battery Preparation)

A lithium secondary battery was prepared in the same manner as in Example 1 except that the above-prepared non-aqueous electrolyte for a lithium secondary battery was injected.

### Comparative Example 3.

### (Non-Aqueous Electrolyte Preparation)

LiPF₆ was dissolved in an organic solvent, in which fluoroethylene carbonate (FEC) and the compound represented by Formula 2A were mixed in a weight ratio of 30:70, such that a concentration of the LiPF₆ was 1.0 M to prepare a non-aqueous electrolyte for a lithium secondary battery.

### (Lithium Secondary Battery Preparation)

A lithium secondary battery was prepared in the same manner as in Example 2 except that the above-prepared non-aqueous electrolyte for a lithium secondary battery was injected.

### Comparative Example 4.

### (Non-Aqueous Electrolyte Preparation)

LiPF₆ was dissolved in an organic solvent, in which ethylene carbonate and the compound represented by Formula 5A were mixed in a weight ratio of 30:70, such that a concentration of the LiPF₆ was 1.0 M to prepare a non-aqueous electrolyte for a lithium secondary battery.

### (Lithium Secondary Battery Preparation)

A lithium secondary battery was prepared in the same manner as in Example 2 except that the above-prepared non-aqueous electrolyte for a lithium secondary battery was injected.

### Comparative Example 5.

### (Positive Electrode Preparation)

A positive electrode active material (Li (Ni_{0.8}Mn_{0.}Co_{0.1})O₂), a conductive agent (carbon black), and a binder (polyvinylidene fluoride, PVDF) were added in a weight ratio of 90:5:5 to N-methyl-2-pyrrolidone (NMP), as a solvent, to prepare a positive electrode active material slurry (solid content 48 wt%). A 100 µm thick positive electrode collector (Al thin film) was coated with the positive electrode active material slurry, dried, and roll-pressed to prepare a positive electrode.

### (Lithium Secondary Battery Preparation)

A lithium secondary battery was prepared in the same manner as in Example 2 except that the above-prepared positive electrode was used.

### Comparative Example 6.

### (Non-Aqueous Electrolyte Preparation)

LiPF₆ was dissolved in an organic solvent, in which fluoroethylene carbonate (FEC) and the compound represented by Formula 5A were mixed in a weight ratio of 30:70, such that a concentration of the LiPF₆ was 1.0 M to prepare a non-aqueous electrolyte for a lithium secondary battery.

### (Lithium Secondary Battery Preparation)

A lithium secondary battery was prepared in the same manner as in Comparative Example 6 except that the above-prepared non-aqueous electrolyte for a lithium secondary battery was injected.

**[Table 1]**

| | Non-aqueous electrolyte | | | | |
|---|---|---|---|---|---|
| | Solvent | | | Additive | |
| | First solve nt | Second solvent | Weight ratio of the first solvent to the second solvent | Compounds | Amount (wt%, based on total weight of the non-aqueous electroly te) |
| Example 1 | EC | Formula 2A | 40:60 | - | - |
| Example 2 | EC | Formula 2A | 30:70 | - | - |
| Example 3 | EC | Formula 2A | 20:80 | - | - |
| Example 4 | EC | Formula 2A | 10:90 | - | - |
| Example 5 | EC | Formula 2B | 30:70 | - | - |
| Example 6 | EC | Formula 2A | 30:70 | Formula 4A | 1 |
| Example 7 | EC | Formula 2A | 30:70 | Formula 5A | 1 |
| Example 8 | EC | Formula 2A | 30:70 | Formula 4A | 0.4 |
| | | | | Formula 5A | 0.3 |
| | | | | LiNO₃ | 0.3 |
| Comparative Example 1 | EC | Formula 2A | 60:40 | - | - |
| Comparative Example 2 | EC | Formula 6 | 30:70 | - | - |
| Comparative Example 3 | FEC | Formula 2A | 30:70 | - | - |
| Comparative Example 4 | EC | Formula 5A | 30:70 | - | - |
| Comparative Example 5 | EC | Formula 2A | 30:70 | - | - |
| Comparative Example 6 | FEC | Formula 5A | 30:70 | - | - |

In Table 1, the abbreviation of each compound has the following meaning.
EC: ethylene carbonate
FEC: fluoroethylene carbonate

### [Experimental Example]

### Experimental Example 1.

Each cell prepared in the examples and the comparative examples was charged in a constant current-constant voltage mode at 1.0 C-rate to 4.2 V at room temperature (25°C) and then discharged at 0.5 C to a cut-off voltage to measure initial capacity.

Subsequently, charging of each cell in a constant current-constant voltage mode at 1.0 C-rate to 4.2 V at a high temperature (45°C) and discharging of each cell at 0.2 C-rate to 2.5 V were defined as one cycle and 100 cycles of the charging and discharging were performed. A capacity retention after 100 cycles at 45°C relative to the initial capacity after 1 cycle was measured, and the results thereof are then presented in Table 2 below.

**[Table 2]**

| | Capacity retention after 100 cycles (%) |
|---|---|
| Example 1 | 96.2 |
| Example 2 | 96.3 |
| Example 3 | 96.4 |
| Example 4 | 96.8 |
| Example 5 | 95.5 |
| Example 6 | 97.1 |
| Example 7 | 97.4 |
| Example 8 | 97.9 |
| Comparative Example 1 | 84.1 |
| Comparative Example 2 | 83.2 |
| Comparative Example 3 | 60.1 |
| Comparative Example 4 | 10.8 |
| Comparative Example 5 | 63.8 |
| Comparative Example 6 | 5.6 |

Referring to Table 2, with respect to the lithium secondary batteries of Examples 1 to 8 of the present disclosure, it may be confirmed that a capacity retention after 100 cycles of 95.5% or more may be secured.

In contrast, with respect to the lithium secondary battery of Comparative Example 1 in which the ratio (A/B) of the weight (A) of the non-fluorinated carbonate organic solvent as the first solvent to the weight (B) of the second solvent was greater than 0.67, it may be understood that the capacity retention after 100 cycles was inferior to that of the lithium secondary batteries of Examples 1 to 8.

Also, with respect to the lithium secondary battery of Comparative Example 2 including the non-fluorinated compound, instead of the compound represented by Formula 2 of the present disclosure, as the second solvent, it may be understood that the capacity retention after 100 cycles was significantly inferior to that of the lithium secondary batteries of Examples 1 to 8.

Furthermore, with respect to the lithium secondary battery of Comparative Example 3 including the fluorinated carbonate solvent as the first solvent, since a film containing a large amount of organic impurities was formed during charge and discharge, resistance was increased and a side reaction was induced, and thus, it may be understood that the capacity retention after 100 cycles was inferior to that of the lithium secondary batteries of Examples 1 to 8.

In addition, with respect to the lithium secondary battery of Comparative Example 4 including the acrylate-based compound represented by Formula 5A, instead of the compound represented by Formula 2 of the present disclosure, as the second solvent, it may be understood that the capacity retention after 100 cycles was significantly inferior to that of the lithium secondary batteries of Examples 1 to 8 due to a reduction in electrolyte wetting and a reduction in film-forming effect which were caused by an increase in viscosity of the electrolyte.

With respect to the lithium secondary battery of Comparative Example 5 using only the ternary positive electrode active material containing a high nickel content, instead of using the two types of positive electrode active materials, as the positive electrode active material, since structural collapse on the surface of the positive electrode active material was intensified during an oxidation/reduction reaction and as a result, a side reaction between released oxygen radicals and the electrolyte solvent was further induced as oxygen release was increased, it may be understood that the capacity retention was significantly inferior to that of the lithium secondary batteries of Examples 1 to 8.

Also, with respect to the lithium secondary battery of Comparative Example 6 which included only the high-nickel ternary positive electrode active material, instead of the two types of positive electrode active materials, as the positive electrode active material and simultaneously included the fluorinated carbonate solvent and the acrylate-based compound as the electrolyte solvent, since the resistance was increased by forming a film containing a large amount of organic impurities during charge and discharge and the electrolyte wetting and the film-forming effect were reduced due to the increase in viscosity of the electrolyte which was caused by the acrylate-based compound, the capacity retention was significantly inferior to that of the lithium secondary batteries of Examples 1 to 8.

Although the present disclosure has been described above with reference to preferred embodiments thereof, it will be understood by those skilled in the art or those of ordinary skill in the art that various modifications and changes may be made therein without departing from the spirit and technical scope of the present disclosure described in the accompanying claims. Accordingly, the technical scope of the present disclosure should not be limited to the contents described in the detailed description of the specification, but should be determined by the claims.

## Claims

1. A lithium secondary battery comprising a positive electrode; a negative electrode facing the positive electrode; a separator disposed between the positive electrode and the negative electrode; and a non-aqueous electrolyte,
wherein the positive electrode comprises a first positive electrode active material and a second positive electrode active material,
the first positive electrode active material comprises lithium iron phosphate represented by Formula 1,
the second positive electrode active material comprises lithium nickel cobalt manganese oxide, and
the non-aqueous electrolyte comprises a lithium salt; a first solvent; and a second solvent,
wherein the first solvent is a non-fluorinated carbonate organic solvent, and
the second solvent is a compound represented by Formula 2,
wherein a ratio (A/B) of a weight (A) of the first solvent to a weight (B) of the second solvent is 0.67 or less:
[Formula 1] Li₁₊ₑFe_{1-gM}²_{g}(PO_{4-f})X_{f}
wherein, in Formula 1, M² is at least one element selected from cobalt (Co), nickel (Ni), manganese (Mn), aluminum (Al), magnesium (Mg), titanium (Ti), and vanadium (V), X is fluorine (F), sulfur (S), or nitrogen (N), and 0≤g≤0.5; -0.5≤e≤+0.5; and 0≤f≤0.1. 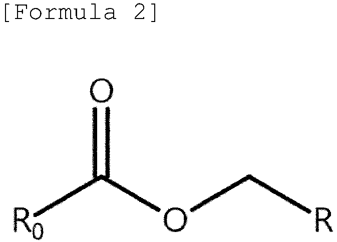
wherein, in Formula 2,
R₀ is an alkyl group having 1 to 5 carbon atoms which is substituted with at least one fluorine atom, and
R is an alkyl group having 1 to 10 carbon atoms.

2. The lithium secondary battery of claim 1, wherein the compound represented by Formula 1 is LiFePO₄, LiMn_{0.5}Fe_{0.5}PO₄, or LiMn_{0.6}Fe_{0.4}PO₄.

3. The lithium secondary battery of claim 1, wherein the lithium nickel cobalt manganese oxide is a compound represented by Formula 3:
[Formula 3] Li₁₊ₐ₁Niₓ₁Co_{y1}M¹_{z}M²_{w}O₂
wherein, in Formula 3,
M¹ is Mn, Al, or a combination thereof,
M² is at least one selected from Al, zirconium (Zr), tungsten (W), Ti, Mg, calcium (Ca), or strontium (Sr), and 0≤a1≤0.5, 0.55<x1<1.0, 0<y1≤0.4, 0<z≤0.4, and 0≤w≤0.1.

4. The lithium secondary battery of claim 1, wherein the lithium nickel cobalt manganese oxide is Li(Ni_{0.6}Mn_{0.2}Co_{0.2})O₂, Li(Ni_{0.7}Mn_{0.15}Co_{0.15})O₂, Li(Ni_{0.7}Mn_{0.2}CO_{0.1})O₂, Li(Ni_{0.8}Mn_{0.1}Co_{0.1})O₂, Li(Ni_{0.8}Co_{0.15}Al_{0.05})O₂, Li(Ni_{0.86}Mn_{0.07}Co_{0.05}Al_{0.02})O₂, or Li(Ni_{0.90}Mn_{0.05}Co_{0.05})O₂.

5. The lithium secondary battery of claim 1, wherein the non-fluorinated carbonate organic solvent is a cyclic non-fluorinated carbonate organic solvent.

6. The lithium secondary battery of claim 1, wherein, in Formula 2, R₀ is an alkyl group having 1 to 5 carbon atoms which is substituted with at least 2 fluorine atoms, and R is an alkyl group having 1 to 5 carbon atoms.

7. The lithium secondary battery of claim 1, wherein, in Formula 2, R₀ is an alkyl group having 1 to 3 carbon atoms which is substituted with at least 2 fluorine atoms, and R is an alkyl group having 1 to 3 carbon atoms.

8. The lithium secondary battery of claim 1, wherein the compound represented by Formula 2 is any one selected from compounds represented by Formulae 2A to 2C:

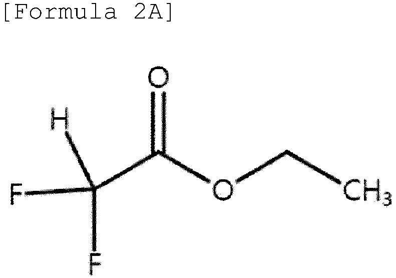

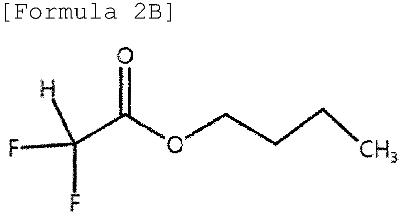

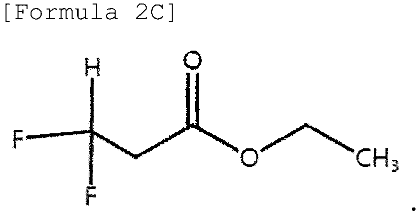

9. The lithium secondary battery of claim 1, wherein a weight ratio of the first solvent to the second solvent is in a range of 1:99 to 40:60.

10. The lithium secondary battery of claim 1, wherein the non-aqueous electrolyte further comprises an additive,
wherein the additive is at least one selected from an imidazole-based compound, an acrylate-based compound, or a nitrate-based compound.

11. The lithium secondary battery of claim 10, wherein the imidazole-based compound is a compound represented by Formula 4: 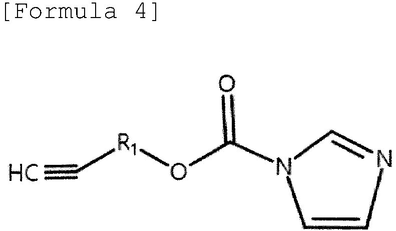 wherein, in Formula 4,
R₁ is an alkylene group having 1 to 5 carbon atoms.

12. The lithium secondary battery of claim 10, wherein the acrylate-based compound is a compound represented by Formula 5: 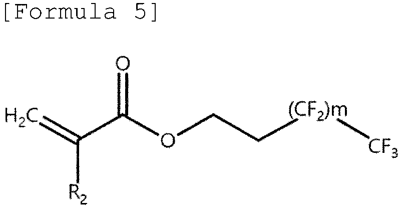 wherein, in Formula 5,
R₂ is hydrogen or an alkyl group having 1 to 3 carbon atoms, and m is an integer of 1 to 10.

13. The lithium secondary battery of claim 10, wherein the nitrate-based compound is lithium nitrate (LiNO₃).
